# FASCICULE DE BREVET EUROPEEN

(11) **EP 3 163 445 B1**
(45) Date de publication et mention de la délivrance du brevet: **24.02.2021**
(21) Numéro de dépôt: 16196392.1
(22) Date de dépôt: 28.10.2016
(51) Int. Cl.: G06F 11/07, G06F 11/34

(54) **MÉCANISME D'ANALYSE DE CORRÉLATION LORS DE LA DÉGRADATION DES PERFORMANCES D'UNE CHAÎNE APPLICATIVE**
MECHANISMUS ZUR KORRELATIONSANALYSE ANLÄSSLICH DER LEISTUNGSVERSCHLECHTERUNG EINER ANWENDUNGSKETTE
MECHANISM FOR ANALYSING CORRELATION DURING PERFORMANCE DEGRADATION OF AN APPLICATION CHAIN

(30) Priorité: 02.11.2015 FR 1560474
(43) Date de publication de la demande: 03.05.2017
(73) Titulaire: Bull S.A.S., 78340 Les Clayes-sous-Bois (FR)
(72) Inventeur: DEMEILLIEZ, Bruno, 38410 Saint Martin d'Uriage (FR); ALVAREZ MARCOS, José Ignacio, 69220 Saint Jean D'Ardieres (FR); ROCHETTE, Florent, 38170 Seyssinet Pariset (FR)
(74) Mandataire: A.P.I. Conseil

(56) Documents cités:
- EP-A1- 1 895 416
- EP-A1- 2 330 510
- US-A1- 2012 185 735

## Description

### DOMAINE TECHNIQUE DE L'INVENTION

La présente invention concerne le domaine de la surveillance d'infrastructures informatiques, et plus particulièrement le domaine de l'analyse de la corrélation des symptômes observable sur une chaîne de liaison applicative lors d'événements de dégradation de ses performances.

### ARRIERE-PLAN TECHNOLOGIQUE DE L'INVENTION

En production, les utilisateurs d'une application peuvent rencontrer des problèmes de performance. Il faut alors analyser l'ensemble de la chaîne applicative en recherchant les causes de cette dégradation des performances. Cette analyse passe notamment par l'observation des consommations des ressources des différents serveurs qui composent la chaîne de liaisons afin de détecter d'éventuelles saturations de ces ressources.

Il faut également être en mesure de comparer l'utilisation de ces ressources lorsque le ou les problèmes de performance se produisent pour s'assurer qu'on est toujours face au même problème. En effet, un problème de performance se manifeste généralement par une empreinte caractéristique sur les serveurs de la chaîne applicative. Si les empreintes sont similaires, il est probable qu'elles soient la manifestation du même traitement applicatif.

Il faut également comparer l'utilisation des ressources lorsque le problème se produit, avec l'utilisation des ressources lorsque le problème n'est pas présent afin de détecter les phénomènes remarquables qui caractérisent la dégradation des performances.

Il existe des solutions pour surveiller/monitorer des serveurs, mais de façon unitaire.

Il est connu par la demande US 2012089724 un système d'analyse des performances d'un serveur. Une commande est envoyée, de façon répétitive pendant des périodes de temps, au système d'exploitation (operating system) d'un serveur pour renvoyer une valeur représentative de la consommation d'une ressource consommée par un ou plusieurs fils d'exécution ou processus légers (threads). Les valeurs renvoyées sont mémorisées et utilisées pour générer un graphe permettant d'identifier les phases de rupture de tâche et le temps de latence.

Toutefois ce système nécessite l'envoi répétitif d'une commande et ne permet que de constater la rupture de tâche et les temps de latence sans pouvoir en déduire des corrélations. De plus, ce système nécessite donc l'envoi de commandes répétitives qui viennent encombrer le réseau. Enfin la fréquence de répétition des commandes peut ne pas coïncider avec le début d'une période de dégradation de performance, ce qui peut générer une perte d'information, ou de précision.

Il est également connu par la demande US2003074161, un système pour contrôler et évaluer la performance d'une application accessible par réseau, comprenant un ou plusieurs serveurs de charge, chacun capable de simuler la charge imposée au serveur d'application par un ou plusieurs clients. Les serveurs de charge sont configurés pour exécuter une séquence particulière de requêtes serveur de façon à évaluer le fonctionnement du serveur sous une charge spécifique. Des métriques de performance diverses associées au fonctionnement du réseau et du serveur d'application sont mesurées pendant le test du serveur et ces métriques sont mémorisées avec le temps auquel elles ont été mesurées, pour être accessibles ultérieurement par un module d'analyse identifiant des corrélations entre les mesures.

Toutefois ce système est utilisé dans la phase test et non en temps réel et d'autre part fait appel à la simulation de charges et non pas à la charge réelle. Il ne permet donc pas d'observer les symptômes sur une chaîne de liaison applicative lors d'événements de dégradation des performances.

Le document US 2012/0185735 A1 enseigne, quant à lui, un procédé pour la détermination de la cause d'un problème de performance dans un système d'intergiciel, le procédé consistant à analyser une pluralité d'indicateurs/métriques de performance dans une première période de temps et déterminer au moins un(e) indicateur/métrique de performance présentant un comportement anormal, à analyser la pluralité d'indicateurs/métriques de performance au cours d'une seconde période de temps, la seconde période de temps étant plus longue que la première période de temps, à déterminer une information de tendance pour chaque indicateur/métrique de performance au cours de la deuxième période de temps, à établir une corrélation entre l'information sur les tendances pour chaque indicateur/métrique de performance avec des informations de problème de performances stockées dans une base de connaissances, à identifier une cause potentielle du comportement anormal basé sur la corrélation, et à alerter un utilisateur de la cause potentielle.

Néanmoins dans ce document, il est fait mention de l'intervention d'un administrateur pour l'analyse des indicateurs/métriques de performance. Le processus de détermination des problèmes de performance ne s'effectue pas, ainsi, en temps réel tout comme dans le document précédent.

Par ailleurs la détermination des tendances des indicateurs/métriques de performance repose sur des valeurs de seuils fixées par l'administrateur. La détection d'une cause à l'origine d'un problème de performance, dépend donc énormément du choix dudit administrateur.

Le document EP2330510 A1 enseigne un dispositif de gestion d'erreurs générées au sein d'un système de communication d'informations. Un tel dispositif permet de collecter des informations liées à la performance d'un ou de plusieurs serveurs. Néanmoins, la solution proposée dans ce document se limite à identifier des intervalles de temps pour lesquels des mesures sont considérées comme défaillantes.

Le document EP1895416 A1 enseigne un dispositif permettant de résumer les données d'événement, tels que des échec ou erreurs systèmes, d'un réseau informatique complexe en points de données significatifs qu'un opérateur peut rapidement examiner pour identifier des schémas répétitifs permettant de comprendre les problèmes systématiques affectant un réseau, ou encore d'identifier les causes liées à des problèmes au sein du réseau sans nécessiter de données détaillant les relations exactes et les interdépendances des réseaux. Pour ce faire, un tel dispositif convertit ainsi les données d'événement, typiquement stockées, rapportées ou affichées sous forme de données tabulaires, en un affichage visuel qui représente virtuellement les relations entre les événements pour un périphérique ou serveur sans nécessiter une connaissance explicite des relations sous-jacentes des périphériques dans le réseau. Toutefois, la solution proposée dans ce document se limite à identifier des relations entre des événements individuels pour des dispositifs donnés et des ressources défaillantes.

### DESCRIPTION GENERALE DE L'INVENTION

La présente invention a pour but de pallier certains inconvénients de l'art antérieur concernant l'analyse de la corrélation des symptômes observables sur une chaîne de liaison applicative lors d'événements de dégradation de ses performances.

L'invention est definie par les revendications 1 et 14 ainsi que leurs dépendantes.

### DESCRIPTION DES FIGURES ILLUSTRATIVES

D'autres particularités et avantages de la présente invention apparaîtront plus clairement à la lecture de la description ci-après, faite en référence aux dessins annexés, dans lesquels:

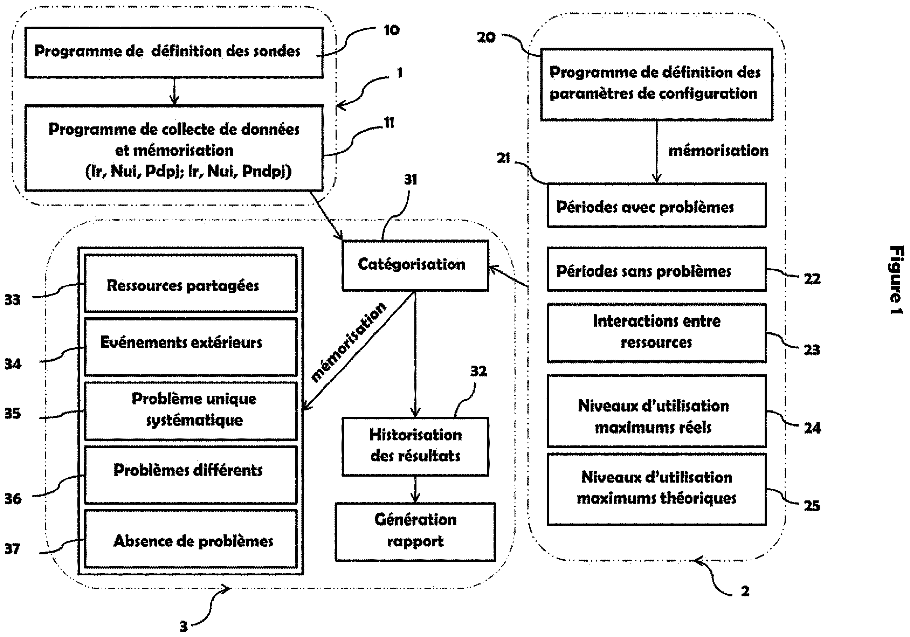

- la figure 1 représente une vue schématique des éléments du dispositif pour mettre en œuvre un mécanisme d'analyse de corrélation lors de la dégradation des performances d'une chaîne applicative selon un mode de réalisation de l'invention.

### DESCRIPTION DES MODES DE REALISATION PREFERES DE L'INVENTION

Dans la suite, une sonde informatique est un logiciel associé à un équipement qui permet d'effectuer, de gérer et faire remonter vers un équipement de surveillance des mesures destinées à informer entre autres de la qualité des flux réseau ou de la qualité de service (QoS, pour « quality of service » en anglais), elles ne nécessitent donc pas l'envoi de commandes répétitives qui viennent encombrer le réseau. De plus la fréquence de répétition des commandes peut ne pas coïncider avec le début d'une période de dégradation de performance, ce qui peut générer une perte d'information, ou de précision.

La présente invention concerne un dispositif comprenant au moins une machine informatique et un logiciel communicant avec les autres matériels ou logiciels d'une chaine applicative pour mettre en œuvre un mécanisme d'analyse de corrélation lors de la dégradation des performances d'une chaîne applicative. La chaîne applicative comprend un ensemble de ressources (*R*₁,..., *Rᵢ,..., Rₙ*) utilisée en tout ou partie par une pluralité de serveurs (*S*₁,..., *Sⱼ*,..., *Sₘ*), la structuration de la chaîne applicative est donc représentée en mémoire par une liste d'identifiants *lrᵢ* de ressources associés à chaque serveur *Sⱼ*.

Dans un mode de réalisation, le dispositif comporte au moins un agencement matériel et logiciel de mémorisation d'un référentiel de mesure (1). Le référentiel de mesure (1) comprend au moins un agencement matériel et logiciel (10), permettant la mesure, par des sondes de consommation, du niveau d'utilisation *Nurᵢ* des ressources *Rᵢ* sur chacun des serveurs *Sᵢ* de l'ensemble des serveurs (*S*₁,..., *Sⱼ*,..., *Sₘ*) qui constituent la chaîne applicative lors des périodes de dégradation des performances *Pdpⱼ*, puis la mémorisation de ces niveaux *Nurᵢ* dans une mémoire (11) du référentiel de mesure (1), en association avec la période *Pdpⱼ,* pour constituer les doublets d'information (*Nurᵢ*, *Pdpⱼ*).

Les sondes de consommation sont associées à chaque ressource pour remonter les informations de mesure ou métriques, représentant le niveau d'utilisation des ressources (*Nur*). Pour chaque ressource, les sondes de consommation définissent un identifiant *lr* pour le nom de la ressource et un niveau d'utilisation *Nu.* Le niveau d'utilisation de chaque ressource *Nurᵢ* correspond à un doublet d'information (*lr*, *Nuᵢ*). Le même processus s'effectue pour les périodes sans problème de performance pour mémoriser des triplets (*lr*, *Nuᵢ, Pndpⱼ*).

La mémoire (11) du référentiel de mesure stocke ainsi des triplets (*lr*, *Nuᵢ, Pdpⱼ*) ou (*lr*, *Nuⱼ, Pdpⱼ*), ce qui présente l'avantage de réduire le nombre et la quantité d'informations envoyées par les sondes, pour réduire l'encombrement du réseau tout en améliorant la précision par rapport aux solutions connues ci-dessus.

Dans certains exemples les ressources sondées peuvent être chaque instance de cluster, chaque cache applicatif, chaque taille des files de messages d'interface de programmation d'applications JMS/JDBC en plus du processeur, des entrées/sorties, et de la mémoire. L'interface de programmation d'applications (API) JMS (service de messagerie java) est une interface de programmation pour l'envoi et la réception de message entre applications et, JDBC (« connectivité des bases de données java ») est une API permettant l'accès à des bases de données.

Des informations telles que :
- la charge sur chacun des serveurs calculée en % d'occupation des ressources (CPU, mémoire);
- la charge sur les entrées /sorties des disques;
- la charge sur le débit du réseau (paquets de connexion TCP et comptage des octets);
les temps de traitement de certains scénarios métiers critiques ou de batchs, peuvent être remontées par les sondes.

Des éléments génériques tels que: charges, % occupations des ressources, temps de réponse, temps de traitement, niveau d'utilisation CPU (unité centrale de traitement), niveau de lecture disque, niveau d'écriture disque...peuvent être mesurés par les sondes mais aussi des éléments ou évènements plus spécifiques tels que le nombre de fichiers ou de ports ouverts, de files de message JDBC ou JMS, le taux d'occupation du système de fichiers, le taux de fonctionnement du ramasse miettes ou récupérateur de mémoires (pour « garbage collector » en anglais) pour les applications J2EE (pour « Java Enterprise Edition » en anglais, J2EE étant une plateforme orientée serveur pour le développement et l'exécution d'applications distribuées),...

Par système de fichiers, d'une architecture matérielle informatique par exemple, on entend un ensemble de principes et de règles selon lesquels les fichiers de ladite architecture informatique sont organisés et manipulés.

La mesure des niveaux d'utilisation des ressources *Nurᵢ* permet de faire une comparaison avec d'autres niveaux d'utilisation de ressources sur le serveur ou les serveurs composant la chaîne applicative. Ce processus à pour objectif de savoir si les observations sont identiques sur l'ensemble des serveurs de la chaîne applicative. Par exemple, le système pourra comparer le niveau de lecture/écriture disque et le niveau de pourcentage d'attente CPU (% wait CPU).

Cette mesure de niveaux d'utilisation des ressources permet en outre de déterminer si le niveau d'utilisation d'une ressource donnée est conforme à celle d'une autre ressource sur un ou plusieurs serveurs de la chaîne applicative. Par exemple, le système pourra déterminer si le niveau de lecture/écriture disque est conforme au niveau de lecture/écriture réseau.

Dans certains exemples !e dispositif comprend également un agencement matériel et logiciel d'édition constituant un référentiel de configuration (2).

Ledit référentiel de configuration (2) comprend au moins un agencement matériel et logiciel (20) permettant de lister et mémoriser:
- dans une mémoire (21) la liste des périodes *Pdpⱼ* où les problèmes de performances se sont produits en comparant les niveaux d'utilisation (*Nuᵢ*) par rapport à un seuil de performance acceptable (Spa) et en mémorisant toutes les périodes *Pdpⱼ* au cours desquelles la performance a été en dessous du seuil Spa, c'est-à-dire s'est dégradée.
- dans une mémoire (22) la liste des périodes *Pndpⱼ* où les problèmes de dégradation de performances ne se sont pas produits;
- dans une mémoire (23) les interactions (*lRpSᵢ*, *lRpSⱼ*,...) entre les ressources des serveurs constituant la chaîne applicative en listant les doublets serveurs *Sᵢ*, ressources *Rₚ* dont les niveaux d'utilisation *Nuᵢ* ont été modifiés dans un intervalle de temps déterminé suite à la variation du niveau d'utilisation (*Nuᵢ*) d'une autre ressource *R_{q}* sur un autre serveur *Sₘ*. Ceci est réalisé en recherchant la période *Pdpⱼ* pour la ressource *R_{q}* correspondant à une variation du niveau *Nuⱼ*, puis à rechercher dans tous les niveaux d'utilisation *Nu* de la ressource *Rₚ* ceux qui sont modifiés dans un intervalle de temps déterminé après la période *Pdpⱼ* de la ressource *R_{q}*. Dans ce cas on mémorisera le triplet (*Nuⱼ, Sᵢ*, *Rₚ*) ou le doublet (*Nuⱼ, Nurₚ*) pour l'interaction *lRpSᵢ*;
- dans une mémoire (24) la liste des niveaux d'utilisation maximum réels *NumrRⱼ* de chaque ressource *Rⱼ*;
- dans une mémoire (25) la liste des niveaux d'utilisation maximum théoriques *NumtR_{q}* de chaque ressource *R_{q}*.

Les niveaux d'utilisation maximum théoriques de chaque ressource sont obtenus, par exemple et de manière non limitative, en fonction d'abaques concernant des infrastructures similaires (exemple: débit réseau ou disque).

Quant aux niveaux d'utilisation maximum réels de chaque ressource, ils sont obtenus, par exemple et de manière non limitative, en analysant les résultats des différentes sondes sur les différentes périodes.

Le listage de ces paramètres (*Pdpⱼ* à *NumrRⱼ*) permet de pouvoir réaliser les comparaisons des niveaux d'utilisation de ressources *Nur* avec d'autres niveaux d'utilisations de ressources sur le serveur ou les serveurs composant la chaîne applicative. Cette comparaison s'effectue sur des périodes *Pdpⱼ* durant lesquelles les problèmes de performance se produisent avec des périodes *Pndpⱼ* sans problèmes de performances. L'objectif est de vérifier que la ressource est ou non à un niveau d'utilisation « normale » et qu'à ce niveau d'utilisation de cette ressource ou de plusieurs ressources liées par les définitions mémorisées des interactions, on a bien le même comportement sur des ressources dépendantes, en mémorisant pour chaque serveur une liste de ressources dépendantes (exemple: niveau de lecture/écriture disque et % wait CPU).

La réalisation de ces analyses corrélatives de façon automatique permet, ainsi, de réduire le temps des incidents en production.

Dans certains exemples le dispositif comprend aussi un module de catégorisation (3) des problèmes de performance en fonction des référentiels de mesure (1) et de configuration (2).

Ledit module de catégorisation des problèmes de performance comprend au moins un agencement matériel et logiciel (31) permettant de réaliser la catégorisation par:
- la création d'une catégorie « ressources partagées » mémorisée dans une mémoire (33) pour une ressource *Rₚ* utilisée par plusieurs serveurs (*Sₖ, Sₗ,..*) et comprenant les associations des niveaux d'utilisation *Nurₚ* par chaque serveur (*Sₖ, Sₗ,..*), d'une ressource *Rₚ* présente sur plusieurs serveurs de la chaîne applicative,
- la comparaison de l'ensemble des niveaux mesurés d'utilisation des ressources *Nurⱼ* et disponibles dans le référentiel de mesure (1) avec les niveaux d'utilisation maximum réels *NumrRⱼ* et théoriques *NumtRⱼ* de chaque ressource *Rⱼ* disponible dans le référentiel de configuration (2) afin de créer pour cette ressource une catégorie « événement extérieur » dans une mémoire (34) d'événement extérieur;
- la comparaison des niveaux mesurés d'utilisation de ressources *Nurⱼ* et disponibles dans le référentiel de mesure (1) avec les périodes *Pdpⱼ* où les problèmes de performances se sont produits et disponibles dans le référentiel de configuration (2), afin de créer les catégories « problème unique systématique » dans une mémoire (35) ou « problèmes différents » dans une mémoire (36) et classer dans une de ces catégories la ressource associée;
- la comparaison des niveaux d'utilisation de ressources mesurés *Nurⱼ* disponibles dans le référentiel de mesure avec les niveaux mesurés dans les périodes *Pndpⱼ* où les problèmes de performances ne se sont pas produits et disponibles dans le référentiel de configuration (2) afin de créer pour cette ressource la catégorie « absence de problème » dans une mémoire (37) et classer dans cette catégorie la ressource associée;
- la génération d'un rapport de catégorie;
et historiser ces résultats grâce à un module d'historisation (32).

La création d'une catégorie « ressources partagées » dans une mémoire (33) (exemple: IO réseau ou disques) s'effectue en utilisant une règle qui consiste à catégoriser ou classer en « ressources partagées » toute ressource *Rⱼ* dont les niveaux d'utilisation *Nurⱼ* sont identifiés sur les différents serveurs (*Sₖ, Sₗ*,..) composant la chaîne applicative, l'identifiant de ladite ressource *Rⱼ* étant stockée dans la mémoire (33) dédiée aux « ressources partagées ».

Cette création est réalisée au moyen des interactions entre les ressources des serveurs disponibles dans la mémoire du référentiel de mesure (1) afin de créer, par ressource, un niveau d'utilisation général *NuGrⱼ* de ladite ressource *Rⱼ.* Ledit niveau d'utilisation général *NuGrⱼ* est obtenu en effectuant la somme Σ *NurSᵢ* totale de tous les niveaux *Nurⱼ* d'une ressource utilisée sur chaque serveur *Sᵢ*, et représente la consommation totale mesurée de la ressource *Rⱼ* sur l'ensemble des serveurs.

La création d'une catégorie « événement extérieur » dans la mémoire (34) d'événement extérieur s'effectue par l'utilisation de la règle suivante: lorsque les niveaux mesurés d'utilisation des ressources *Nurⱼ* ne sont pas cohérents avec les niveaux d'utilisation maximum réels *NumrRⱼ* et théoriques *NumtRⱼ* de chaque ressource *Rⱼ* disponible dans le référentiel de configuration (2) (par exemple la saturation d'un système de stockage sans lien avec le niveau de lecture/écriture de l'ensemble des serveurs de la chaîne applicative), si une ressource donnée *Rⱼ* présente un niveau *Nurⱼ* dépassant les niveaux d'utilisations maximums réels et théoriques mais n'est pas associée à un identifiant *lr_{¡},* cette ressource *Rⱼ* est catégorisée «événement extérieur» et son identifiant stocké dans ladite mémoire (34) d'événement extérieur.

La création d'une catégorie « problème unique systématique » s'effectue par l'utilisation de la règle suivante: lorsque les niveaux mesurés d'utilisation d'une ressource sont identiques sur différentes périodes (*Pdpⱼ, Pdpₙ*), si une ressource *Rᵢ* présente un niveau *Nurᵢ* supérieur au niveau maximum théorique *NumtRⱼ* ou réel *NumrRⱼ* sur seulement une des périodes présentant des problèmes de performances, cette ressource est catégorisée « problème unique systématique ».

La création pour une ressource d'une catégorie «problèmes différents» s'effectue lorsque les niveaux mesurés d'utilisation de plusieurs ressources sont différents sur plusieurs périodes.

La création pour une ressource d'une catégorie «absence de problème» s'effectue lorsque les niveaux d'utilisation des ressources mesurés lors des périodes où les problèmes de performances se sont produits sont similaires aux niveaux d'utilisation de ressources mesurés lors des périodes où les problèmes de performances ne se sont pas produits.

Dans certains exemples le rapport de catégorie est généré par un agencement matériel et logiciel qui décrit des règles permettant de classer les ressources dans une des catégories de la liste des catégories de problème de performance trouvés, chacune des catégories «absence de problème», «événement extérieur», «problème unique systématique», «problèmes différents» et «ressources partagées» contenant:
- un tableau synthétique de l'utilisation des niveaux d'utilisation des ressources caractéristiques appartenant à la catégorie du problème (des ressources à saturation théorique ou réelle ne se produisant que dans ces périodes);
- un tableau détaillé des niveaux de ressources à saturation ou proche de la saturation théorique ou réelle sur l'ensemble de la chaîne de liaison qui répertorie l'ensemble des niveaux *Nu* et des identifiants *lr* permettant notamment de distinguer la ressource qui l'est régulièrement de celle qui l'est uniquement lors de la dégradation des performances.

Dans certains exemples un procédé d'analyse de corrélation lors de la dégradation des performances d'une chaîne applicative comporte
- une étape de mesure du niveau d'utilisation des ressources sur l'ensemble des serveurs qui constituent la chaîne applicative lors des périodes de dégradation des performances;
- une étape de mémorisation du niveau d'utilisation des ressources sur l'ensemble des serveurs constituant la chaîne applicative lors des périodes de non dégradation des performances;
- une étape de construction d'un référentiel de configuration (2) à partir des données obtenues dans les étapes de mesure et de mémorisation des niveaux d'utilisation des ressources de l'ensemble des serveurs de la chaîne applicative;
- une étape de catégorisation de chaque problèmes de performance (3) d'une ou plusieurs ressources à partir du référentiel de configuration (2) et des données obtenues dans les étapes de mesure et de mémorisation des niveaux d'utilisation des ressources de l'ensemble des serveurs de la chaîne applicative;
- une étape de génération du rapport de catégorisation.

La présente demande décrit diverses caractéristiques techniques et avantages en référence aux figures

## Revendications

1. Dispositif comprenant au moins une machine informatique et un logiciel pour mettre en œuvre un mécanisme d'analyse de corrélation lors de la dégradation des performances d'une chaîne applicative, le dispositif comprenant un agencement matériel et logiciel de mémorisation d'un référentiel de mesure (1), ledit référentiel de mesure (1) comprenant un agencement matériel et logiciel (10) permettant la mesure, par des sondes de consommation, du niveau d'utilisation de chaque ressources sur l'ensemble des serveurs de la chaîne applicative lors des périodes de dégradation des performances, puis la mémorisation dans une mémoire (11) de ces niveaux dans le référentiel de mesure (1), en association avec la période, ledit dispositif étant caractérisé en qu'il comprend en outre :
- un agencement matériel et logiciel d'édition d'un référentiel de configuration (2) permettant de lister et mémoriser des paramètres pour la réalisation d'analyses de comparaison avec des données du référentiel de mesure (1), lesdits paramètres comportant : des niveaux d'utilisation maximum réels et théoriques de chaque ressource, des périodes où les problèmes de performances se sont produits, des périodes où les problèmes de performances ne se sont pas produits des interactions entre les ressources des serveurs constituant la chaîne applicative ; et
- un module de catégorisation (3) des problèmes de performance en fonction des données listées et mémorisées du référentiel de mesure (1) et desdits paramètres listés et mémorisés dans le référentiel de configuration (2).

2. Dispositif selon la revendication 1, **caractérisé en ce que** le module de catégorisation (3) des problèmes de performance comprend au moins un agencement matériel et logiciel (31) permettant de créer une catégorie «ressources partagées» pour une ressource utilisée par plusieurs serveurs comprenant les associations des niveaux d'utilisation, par chaque serveur, de ladite ressource, cette création étant réalisée au moyen des interactions entre les ressources des serveurs disponibles dans le référentiel de mesure (1) afin de créer, par ressource, un niveau d'utilisation général de ladite ressource mémorisé dans une mémoire (33) en association avec la liste de toutes les serveurs partageant cette ressource.

3. Dispositif selon l'une des revendications 1 ou 2, **caractérisé en ce que** le module de catégorisation (3) des problèmes de performance comprend au moins un agencement matériel et logiciel (31) permettant de réaliser la comparaison de l'ensemble des niveaux mesurés d'utilisation des ressources et disponibles dans le référentiel de mesure (1) avec les niveaux d'utilisation maximum réel et théorique de chaque ressource disponible dans le référentiel de configuration (2), afin de créer une catégorie «événement extérieur», mémorisée dans une mémoire (34).

4. Dispositif selon la revendication 3, **caractérisé en ce que** l'agencement matériel et logiciel (31) permet d'exécuter la règle suivante : lorsque les niveaux mesurés d'utilisation des ressources ne sont pas cohérents avec les niveaux d'utilisation maximum réels et théoriques de chaque ressource disponible dans le référentiel de configuration (2), si une ressource donnée présente un niveau d'utilisation dépassant les niveaux d'utilisations maximums réels et théoriques mais n'est pas associée à un identifiant de ressources associés à un serveur, cette ressource est catégorisée «événement extérieur» et son identifiant stocké dans ladite mémoire (34) d'événement extérieur.

5. Dispositif selon l'une quelconque des revendications 1 à 4, **caractérisé en ce que** le module de catégorisation (3) des problèmes de performance comprend au moins un agencement matériel et logiciel (31) permettant de réaliser la comparaison des niveaux mesurés d'utilisation de ressources et disponibles dans le référentiel de mesure (1) avec les périodes où les problèmes de performances se sont produits et disponibles dans le référentiel de configuration (2) afin de créer les catégories «problème unique systématique» et «problèmes différents», et
- la mémorisation d'une ressource dans une mémoire (35) dédiée aux «problèmes uniques systématiques» lorsque les niveaux mesurés d'utilisation de cette ressource sont identiques sur différentes périodes, et
- la mémorisation d'une ressource dans une mémoire (36) dédiée aux «problèmes différents» (36) lorsque les niveaux mesurés d'utilisation de plusieurs ressources sont différents sur plusieurs périodes.

6. Dispositif selon la revendication 5, **caractérisé en ce que** l'agencement matériel et logiciel (31) permettant la mémorisation d'une ressource dans une mémoire (35) dédiée aux «problèmes uniques systématiques» permet d'exécuter la règle suivante : lorsque les niveaux mesurés d'utilisation d'une ressource sont identiques sur différentes périodes, si une ressource présente un niveau supérieur au niveau maximum théorique ou réel sur seulement une des périodes présentant des problèmes de performances, cette ressource est catégorisée « problème unique systématique ».

7. Dispositif selon l'une quelconque des revendications 1 à 6, **caractérisé en ce que** le module de catégorisation (3) des problèmes de performance comprend au moins un agencement matériel et logiciel (31) permettant de réaliser la comparaison des niveaux d'utilisation de ressources mesurés disponibles dans le référentiel de mesure (1) lors des périodes où les problèmes de performance se sont produits avec les niveaux d'utilisation des même ressources mesurés lors des périodes où les problèmes de performance ne se sont pas produits et disponibles dans le référentiel de configuration (2), afin de créer la catégorie «absence de problème» et mémoriser, dans une mémoire (37) dédiée, chaque ressource pour laquelle lesdits niveaux d'utilisation sont similaires.

8. Dispositif selon l'une quelconque des revendications 1 à 7, **caractérisé en ce que** le module de catégorisation (3) des problèmes de performance comprend au moins un agencement matériel et logiciel (31) permettant de réaliser la génération d'un rapport de catégorie.

9. Dispositif selon la revendication 8, **caractérisé en ce que** le rapport de catégorie généré par l'agencement matériel et logiciel contient la liste des catégories de problème de performance trouvés, chacune des catégories «absence de problème», « événement extérieur», «problème unique systématique», «problèmes différents» et «ressources partagées» contenant:
- un tableau synthétique de l'utilisation des niveaux d'utilisation des ressources caractéristiques appartenant à la catégorie du problème,
- un tableau détaillé des niveaux de ressources à saturation ou proche de la saturation théorique ou réelle sur l'ensemble de la chaîne de liaison.

10. Dispositif selon une des revendications précédentes, **caractérisé en ce que**, les ressources sondées sont chaque instance de cluster, chaque cache applicatif, chaque taille des files de messages JMS/JDBC en plus du processeur, des entrées/sorties, et de la mémoire.

11. Dispositif selon une des revendications précédentes, **caractérisé en ce que** l'agencement matériel et logiciel de mémorisation d'un référentiel de mesure (1) permet de définir la surveillance d'éléments génériques à toutes les applications telles que les charges et/ou les % occupations des ressources et/ou les temps de réponse et/ou les temps de traitement et/ou le niveau d'utilisation CPU et/ou le niveau de lecture disque et/ou le niveau d'écriture disque.

12. Dispositif selon une des revendications précédentes, **caractérisé en ce que** l'agencement matériel et logiciel de mémorisation d'un référentiel de mesure (1) permet de définir la surveillance d'éléments plus spécifiques correspondant au nombre de fichiers ou de ports ouverts, et/ou de files de messages JDBC ou JMS et/ou au taux d'occupation du système de fichiers et/ou au taux de fonctionnement du ramasse miettes ou récupérateur de mémoires pour les applications J2EE.

13. Dispositif selon une des revendications précédentes, **caractérisé en ce que** l'agencement matériel et logiciel (10) du référentiel de mesure (1) permet la mémorisation du niveau d'utilisation des ressources sur chacun des serveurs de l'ensemble des serveurs dans une mémoire (11), en association avec la période et un identifiant de la ressource, sous la forme de triplets d'information.

14. Procédé d'analyse de corrélation lors de la dégradation des performances d'une chaîne applicative comportant :
- une étape de mesure du niveau d'utilisation des ressources sur l'ensemble des serveurs qui constituent la chaîne applicative lors des périodes de dégradation des performances ;
- une étape de mémorisation du niveau d'utilisation des ressources sur l'ensemble des serveurs constituant la chaîne applicative lors des périodes de non dégradation des performances ;
ledit procédé étant **caractérisé en ce qu'**il comprend également :
- une étape de construction d'un référentiel de configuration (2) à partir des données obtenues dans les étapes de mesure et de mémorisation des niveaux d'utilisation des ressources de l'ensemble des serveurs de la chaîne applicative, incluant la mémorisation : des niveaux d'utilisation maximum réels et théoriques de chaque ressource, des périodes où les problèmes de performances se sont produits, des périodes où les problèmes de performances ne se sont pas produits des interactions entre les ressources des serveurs constituant la chaîne applicative ;
- une étape de catégorisation de chaque problème de performance d'une ou plusieurs ressources à partir du référentiel de configuration (2) et des données obtenues dans les étapes de mesure et de mémorisation des niveaux d'utilisation des ressources de l'ensemble des serveurs de la chaîne applicative ;
- une étape de génération du rapport de catégorisation.

## Patentansprüche

1. Vorrichtung, umfassend mindestens einen Rechner und eine Software zum Implementieren eines Korrelationsanalysemechanismus, wenn sich die Leistung einer Anwendungskette verschlechtert, wobei die Vorrichtung eine Hardware- und Software-Anordnung zum Speichern eines Messreferenzsystems (1) umfasst, wobei das Messreferenzsystem (1) eine Hardware- und Software-Anordnung (10) umfasst, die die Messung durch Verbrauchssensoren des Nutzungsgrades jeder Ressource auf allen Servern der Anwendungskette während der Zeiträume der verminderten Leistung und anschließend die Speicherung in einen Speicher (11) dieser Nutzungsgrade in dem Messreferenzsystem (1), in Verbindung mit dem Zeitraum, ermöglicht, wobei die Vorrichtung **dadurch gekennzeichnet ist, dass** sie weiter umfasst:
- eine Hardware- und Software-Anordnung zum Editieren eines Konfigurationsreferenzsystems (2), die es ermöglicht, Parameter zur Durchführung von Vergleichsanalysen mit den Daten des Messreferenzsystems (1) aufzulisten und zu speichern, wobei die Parameter umfassen: tatsächliche und theoretische maximale Nutzungsgrade jeder Ressource, Zeiträume, in denen die Leistungsprobleme auftraten, Zeiträume, in denen keine Leistungsprobleme auftraten, Wechselwirkungen zwischen den Ressourcen der Server, die die Anwendungskette bilden; und
- ein Modul zum Kategorisieren (3) der Leistungsprobleme in Abhängigkeit von den im Messreferenzsystem (1) aufgelisteten und gespeicherten Daten und den im Konfigurationsreferenzsystem (2) aufgelisteten und gespeicherten Parametern.

2. Vorrichtung nach Anspruch 1, **dadurch gekennzeichnet, dass** das Modul zum Kategorisieren (3) der Leistungsprobleme zumindest eine Hardware- und Software-Anordnung (31) umfasst, die die Schaffung einer Kategorie ''gemeinsam genutzte Ressourcen" für eine von mehreren Servern genutzte Ressource ermöglicht, die die Zuordnung der Nutzungsgrade, für jeden Server, dieser Ressource umfasst, wobei diese Schaffung mithilfe der Wechselwirkungen zwischen den in dem Messreferenzsystem (1) zur Verfügung stehenden Ressourcen der Server erfolgt, um pro Ressource einen allgemeinen Nutzungsgrad der Ressource zu schaffen, der in einem Speicher (33) gespeichert wird, in Kombination mit der Liste aller Server, die diese Ressource gemeinsam nutzen.

3. Vorrichtung nach einem der Ansprüche 1 oder 2, **dadurch gekennzeichnet, dass** das Modul zum Kategorisieren (3) der Leistungsprobleme zumindest eine Hardware- und Software-Anordnung (31) umfasst, die die Durchführung des Vergleichs aller gemessenen und in dem Messreferenzsystem (1) zur Verfügung stehenden Nutzungsgrade der Ressourcen mit den tatsächlichen und theoretischen maximalen Nutzungsgraden jeder in dem Konfigurationsreferenzsystem (2) zur Verfügung stehenden Ressource ermöglicht, um eine Kategorie "externes Ereignis" zu schaffen, die in einem Speicher (34) gespeichert wird.

4. Vorrichtung nach Anspruch 3, **dadurch gekennzeichnet, dass** die Hardware- und Software-Anordnung (31) die Ausführung der folgenden Regel ermöglicht: Wenn die gemessenen Nutzungsgrade der Ressourcen nicht im Einklang mit den tatsächlichen und theoretischen maximalen Nutzungsgraden jeder Ressource stehen, die im Konfigurationsreferenzsystem (2) zur Verfügung steht, falls eine bestimmte Ressource einen Nutzungsgrad aufweist, der die tatsächlichen und theoretischen maximalen Nutzungsgrade übersteigt, jedoch nicht mit einer Kennung von Ressourcen verknüpft ist, die einem Server zugeordnet sind, wird diese Ressource als "externes Ereignis" kategorisiert und ihre Kennung in dem Speicher (34) für externe Ereignisse gespeichert.

5. Vorrichtung nach einem der Ansprüche 1 bis 4, **dadurch gekennzeichnet, dass** das Modul zum Kategorisieren (3) der Leistungsprobleme zumindest eine Hardware- und Software-Anordnung (31) umfasst, die die Durchführung des Vergleichs aller gemessenen und in dem Messreferenzsystem (1) zur Verfügung stehenden Nutzungsgrade der Ressourcen mit den Zeiträumen ermöglicht, in denen die Leistungsprobleme auftraten und die in dem Konfigurationsreferenzsystem (2) zur Verfügung stehen, um die Kategorien ''einzelnes systematisches Problem" und ''verschiedene Probleme" zu schaffen, und
- das Speichern einer Ressource in einem Speicher (35), der für "einzelne systematische Probleme" bestimmt ist, wenn die gemessenen Nutzungsgrade dieser Ressource in verschiedenen Zeiträumen gleich sind, und
- das Speichern einer Ressource in einem Speicher (36), der für "verschiedene Problemen" bestimmt ist, wenn die gemessenen Nutzungsgrade von mehreren Ressourcen über mehrere Zeiträume verschieden sind.

6. Vorrichtung nach Anspruch 5, **dadurch gekennzeichnet, dass** die Hardware- und Software-Anordnung (31), die die Speicherung einer Ressource in einem Speicher (35) ermöglicht, der für "einzelne systematische Probleme" bestimmt ist, die Ausführung der folgenden Regel ermöglicht: Wenn die gemessenen Nutzungsgrade einer Ressource über verschiedene Zeiträume gleich sind, falls eine Ressource einen höheren Nutzungsgrad als den theoretischen oder tatsächlichen maximalen Nutzungsgrad nur über einen der Zeiträume aufweist, in dem Leistungsprobleme auftreten, wird diese Ressource als "einzelnes systematisches Problem" kategorisiert.

7. Vorrichtung nach einem der Ansprüche 1 bis 6, **dadurch gekennzeichnet, dass** das Modul zum Kategorisieren (3) der Leistungsprobleme zumindest eine Hardware und Software-Anordnung (31) umfasst, die die Durchführung des Vergleichs der gemessenen und in dem Messreferenzsystem (1) zur Verfügung stehenden Nutzungsgrade der Ressourcen während der Zeiträume, in denen die Leistungsprobleme auftraten, mit den Nutzungsgraden der gleichen Ressourcen ermöglicht, die während der Zeiträume gemessen wurden, in denen die Leistungsprobleme nicht auftraten und die in dem Konfigurationsreferenzsystem (2) zur Verfügung stehen, um die Kategorie "kein Problem" zu schaffen und in einem speziellen Speicher (37) jede Ressource zu speichern, für die die Nutzungsgrade ähnlich sind.

8. Vorrichtung nach einem der Ansprüche 1 bis 7, **dadurch gekennzeichnet, dass** das Modul zum Kategorisieren (3) der Leistungsprobleme zumindest eine Hardware- und Software-Anordnung (31) umfasst, die die Durchführung der Erstellung eines Kategorieberichts ermöglicht.

9. Vorrichtung nach Anspruch 8, **dadurch gekennzeichnet, dass** der Kategoriebericht, der von der Hardware- und Software-Anordnung erstellt wird, die Liste der Kategorien der gefundenen Leistungsprobleme enthält, wobei jede der Kategorien "kein Problem", "externes Ereignis", "einzelnes systematisches Problem", "verschiedene Probleme" und "gemeinsam genutzte Ressourcen" enthält:
- eine Übersichtstabelle der Nutzungsgrade der charakteristischen Ressourcen, die zu der Kategorie des Problems gehören,
- eine detaillierte Tabelle der Nutzungsgrade der Ressourcen bei oder nahe der theoretischen oder tatsächlichen Sättigung über die gesamte Verbindungskette.

10. Vorrichtung nach einem der vorstehenden Ansprüche, **dadurch gekennzeichnet, dass** die untersuchten Ressourcen jede Cluster-Instanz, jeder Anwendungs-Cache, jede Größe der JMS/JDBC-Nachrichtenwarteschlangen zusätzlich zu Prozessor, Ein- bzw. Ausgängen und Speicher sind.

11. Vorrichtung nach einem der vorstehenden Ansprüche, **dadurch gekennzeichnet, dass** es die Hardware- und Software-Anordnung zum Speichern eines Messreferenzsystems (1) ermöglicht, die Überwachung von Elementen zu definieren, die für alle Anwendungen generisch sind, wie beispielsweise Auslastung und/oder Belegung der Ressourcen in Prozent und/oder Reaktionszeit und/oder Bearbeitungszeit und/oder Nutzungsgrad der CPU und/oder Grad der Auslese- und/oder Schreibvorgänge von bzw. auf Datenträger.

12. Vorrichtung nach einem der vorstehenden Ansprüche, **dadurch gekennzeichnet, dass** es die Hardware- und Software-Anordnung zum Speichern eines Messreferenzsystems (1) ermöglicht, die Überwachung von spezifischeren Elementen zu definieren, die der Anzahl von Dateien oder offener Ports und/oder JDBC- oder JMS-Nachrichtenwarteschlangen und/oder dem Belegungsgrad des Dateisystems und/oder der Betriebsrate des Garbage Collectors für die J2EE-Anwendungen entsprechen.

13. Vorrichtung nach einem der vorstehenden Ansprüche, **dadurch gekennzeichnet, dass** die Hardware- und Software-Anordnung (10) des Messreferenzsystems (1) die Speicherung des Nutzungsgrads der Ressourcen auf jedem Server aller Server in einem Speicher (11), in Kombination mit dem Zeitraum und einer Kennung der Ressource, in Form von Informationstriplets ermöglicht.

14. Verfahren zur Korrelationsanalyse bei der Verschlechterung der Leistungen einer Anwendungskette, umfassend:
- einen Schritt des Messens des Nutzungsgrades der Ressourcen auf allen Servern, die die Anwendungskette bilden, in Zeiträumen mit Leistungsverschlechterung;
- einen Schritt des Speicherns des Nutzungsgrades der Ressourcen auf allen Servern, die die Anwendungskette bilden, in Zeiträumen ohne Leistungsverschlechterung;
wobei das Verfahren **dadurch gekennzeichnet ist, dass** es weiter umfasst:
- einen Schritt des Erstellens eines Konfigurationsreferenzsystems (2) aus Daten, die in den Schritten des Messens und des Speicherns der Nutzungsgrade der Ressourcen aller Server der Anwendungskette erhalten wurden, einschließlich der Speicherung der tatsächlichen und theoretischen maximalen Nutzungsgrade jeder Ressource, der Zeiträume, in denen Leistungsprobleme auftraten, der Zeiträume, in denen keine Leistungsprobleme auftraten, der Wechselwirkungen zwischen den Ressourcen der Server, die die Anwendungskette bilden;
- einen Schritt des Kategorisierens jedes Leistungsproblems einer oder mehrerer Ressourcen ausgehend von dem Konfigurationsreferenzsystem (2) und den Daten, die in den Schritten des Messens und des Speicherns der Nutzungsgrade der Ressourcen aller Server der Anwendungskette erhalten wurden;
- einen Schritt des Erstellens des Kategorisierungsberichts.

## Claims

1. A device comprising at least a computer machine and a software to implement a mechanism for analyzing a correlation during the degradation of the performances of an application chain, the device comprising a hardware and software arrangement for storing a measurement repository (1), said measurement repository (1) comprising a hardware and software arrangement (10) allowing the measurement, by consumption probes, of the level of use of each resource on all of the servers of the application chain during the periods of degradation of the performances, then the storage in a memory (11) of these levels in the measurement repository (1), in association with the period, said device being **characterized in that** it further comprises:
- a hardware and software arrangement for editing a configuration repository (2) allowing the listing and storage of the parameters in order to perform comparison analyses with data from the measurement repository (1), said parameters including: actual and theoretical maximum levels of use of each resource, periods where the performance problems occurred, periods where the performance problems did not occur, interactions between the resources of the servers constituting the application chain; and
- a module for categorizing (3) the performance problems based on the listed and stored data from the measurement repository (1) and on said parameters listed and stored in the configuration repository (2).

2. The device according to claim 1, **characterized in that** the module for categorizing (3) the performance problems comprises at least a hardware and software arrangement (31) allowing the creation of a "shared resources" category for a resource used by several servers comprising the associations of the levels of use, by each server, of said resource, this creation being carried out by means of the interactions between the resources of the servers available in the measurement repository (1) in order to create, by resource, a general level of use of said resource stored in a memory (33) in association with the list of all the servers sharing this resource.

3. The device according to any of claims 1 or 2, **characterized in that** the module for categorizing (3) the performance problems comprises at least a hardware and a software arrangement (31) allowing the comparison of all of the measured levels of use of the resources and available in the measurement repository (1) with the actual and theoretical maximum levels of use of each resource available in the configuration repository (2), in order to create an "external event" category, stored in a memory (34).

4. The device according to claim 3, **characterized in that** the hardware and software arrangement (31) allows executing the following rule: when the measured levels of use of the resources are not consistent with the actual and theoretical maximum levels of use of each resource available in the configuration repository (2), if a given resource has a level of use exceeding the actual and theoretical maximum levels of use but is not associated with an identifier of resources associated with a server, this resource is categorized as "external event" and its identifier stored in said memory (34) as external event.

5. The device according to any one of claims 1 to 4, **characterized in that** the module for categorizing (3) the performance problems comprises at least a hardware and software arrangement (31) allowing the comparison of the measured levels of use of resources and available in the measurement repository (1) during the periods where the performance problems occurred and available in the configuration repository (2) in order to create the "single systematic problem" and "different problems" categories, and
- storing a resource in a memory (35) dedicated to the "single systematic problems" when the measured levels of use of this resource are identical over different periods, and
- storing a resource in a memory (36) dedicated to the "different problems" when the measured levels of use of several resources are different over several periods.

6. The device according to claim 5, **characterized in that** the hardware and software arrangement (31) allowing the storage of a resource in a memory (35) dedicated to the "single systematic problems" allows executing the following rule: when the measured levels of use of a resource are identical over different periods, if a resource has a level higher than the theoretical or actual maximum level over only one of the periods having performance problems, this resource is categorized as "single systematic problem".

7. The device according to any one of claims 1 to 6, **characterized in that** the module for categorizing (3) the performance problems comprises at least a hardware and software arrangement (31) allowing the comparison of the measured levels of use of resource and available in the measurement repository (1) during the periods where the performance problems occurred with the levels of use of the same resources measured during the periods where the performance problems did not occur and are available in the configuration repository (2), in order to create the "no problem" category and store, in a dedicated memory (37), each resource for which said levels of use are similar.

8. The device according to any one of claims 1 to 7, **characterized in that** the module for categorizing (3) the performance problems comprises at least a hardware and software arrangement (31) allowing the generation of a category report.

9. The device according to claim 8, **characterized in that** the category report generated by the hardware and software arrangement contains the list of the categories of performance problems found, each of the "no problem", "external event", "single systematic problem", "different problems" and "shared resources" categories containing:
- a summary table of the use of the levels of use of the characteristic resources belonging to the category of the problem,
- a detailed table of the resource levels at or close to the theoretical or actual saturation over the entire linking chain.

10. The device according to any of the preceding claims, **characterized in that**, the probed resources are each cluster instance, each application cache, each size of the JMS/JDBC message queues in addition to the processor, to the inputs/outputs and to the memory.

11. The device according to any of the preceding claims, **characterized in that** the hardware and software arrangement for storing a measurement repository (1) allows defining the monitoring of generic elements for all the applications such as the loads and/or the % occupations of the resources and/or the response times and/or the processing times and/or the CPU use level and/or the disk read level and/or the disk write level.

12. The device according to any of the preceding claims, **characterized in that** the hardware and software arrangement for storing a measurement repository (1) allows defining the monitoring of more specific elements corresponding to the number of open files or ports, and/or of JDBC or JMS message queues and/or to the occupancy rate of the file system and/or to the operating rate of the garbage collector for the J2EE applications.

13. The device according to any of the preceding claims, **characterized in that** the hardware and software arrangement (10) of the measurement repository (1) allows the storage of the level of use of the resources on each of the servers of all of the servers in a memory (11), in association with the period and an identifier of the resource, in the form of triples of information.

14. A method for analyzing a correlation during the degradation of the performances of an application chain including:
- a step of measuring the level of use of the resources on all of the servers that constitute the application chain during the periods of degradation of the performances;
- a step of storing the level of use of the resources on all of the servers constituting the application chain during the periods of non-degradation of the performances:
said method being **characterized in that** it also comprises:
- a step of building a configuration repository (2) from the data obtained in the steps of measuring and storing the levels of use of the resources of all of the servers of the application chain, including the storage: of the actual and theoretical maximum levels of use of each resource, of the periods where the performance problems occurred, of the periods where the performance problems did not occur, of the interactions between the resources of the servers constituting the application chain;
- a step of categorizing each performance problem of one or several resource(s) from the configuration repository (2) and the data obtained in the steps of measuring and storing the levels of use of the resources of all of the servers of the application chain;
- a step of generating the categorization report.
